(19)

Europäisches
Patentamt
European
Patent Office
Office européen
des brevets

(11) **EP 3 637 075 A1**

(12) **EUROPEAN PATENT APPLICATION**

(43) Date of publication:
**15.04.2020  Bulletin 2020/16**

(51) Int Cl.:
***G01L 5/28*** *(2006.01)*    ***G01L 25/00*** *(2006.01)*

(21) Application number: **19000459.8**

(22) Date of filing: **09.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.10.2018  HR 20181618**

(27) Previously filed application:
**09.10.2018 HR P20181618**

(71) Applicant: **Centar Za Vozila Hrvatske, dionicko drustvo**
**10000 Zagreb (HR)**

(72) Inventors:
• **Posavec, Robert**
  **10000 Zagreb (HR)**
• **Gasljevic, I., Gordan**
  **10000 Zagreb (HR)**

Remarks:
Claims filed after the date of filing of the application (Rule 68(4) EPC).

(54)    **APPARATUS FOR CALIBRATING A DEVICE WITH ROLLERS FOR EVALUATION OF BREAKING FORCE ON A OUTER SIDE OF A WHEEL**

(57)    The apparatus for calibrating a device with rollers for evaluation of breaking force on a outer side of a wheel consists of the apparatuses body [6]. apparatuses column [7] and control unit [10]. The increasing and decreasing of the force during calibration is achieved by means of the driving machine [9] that by lifting or lowering the driving machine's piston [26] lifts or lowers the apparatuses moment lever [8] which rotates around the apparatuses pivot [29] and thereby lifts or lowers the connecting lever [28]. The apparatuses lever [25] and the connecting levers [28] are threaded and can therefore be connected and secured by a coupling [24]. The device is controlled with a specifically designed app installed on an Android device connected to the control unit [10] through Bluetooth connection. The width of the device in the transport position is 1 metre. The device is powered by rechargeable batteries that are housed in the control unit [10].

Figure 1

EP 3 637 075 A1

**Description**

1. **Area to which the patent relates**

Pursuant to the International Patent Classification (IPC) the device for the calibration of roller brake testers for testing the braking force on the wheel rim is classified under section G - Physics, class G01 - Measuring; Testing, subclass G01L - Measuring force, stress, moment, work, mechanical power, mechanical efficiency, or fluid pressure, group G01L 25/00 - Testing or calibrating of apparatus for measuring force, moment, work, mechanical power, or mechanical efficiency.

2. **Technical problem**

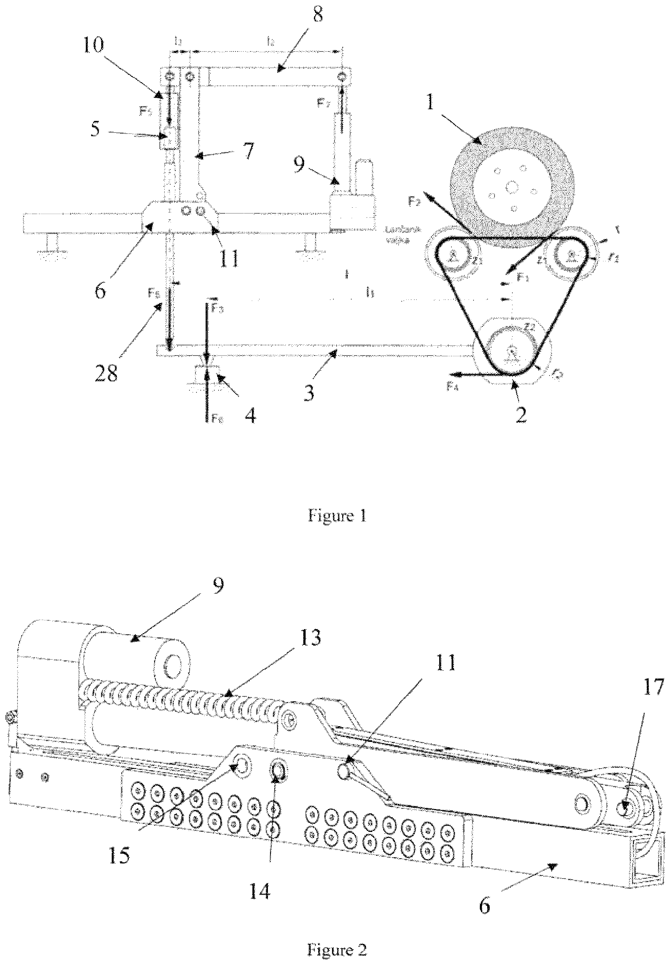

In addition to other devices, vehicle inspection stations are also equipped with a roller brake tester for testing the braking force at the wheel rim (hereinafter: roller brake tester). According to Figure 1, if we analyse the testing of the braking force on a roller brake tester, braking force is defined as the force that the wheels of the tested vehicle [1] generate in an effort to stop the rollers of the roller brake tester, and is calculated from the reactive force of the stator of the electric motor of the roller brake tester [2]. The reaction between the rotor and the stator is transferred by the electric motor lever [3] to the measuring element of the roller brake tester [4]. The measuring element of the roller brake tester [4] converts the measured force $F_3$ into an electric signal which is converted into braking force and displayed in analogue and/or digital form.

From the aspect of rollers, as the model on Figure 1 shows, the total braking force $F$ is:

$$F = F_1 + F_2 \qquad (1.1)$$

The force achieved on the measuring element of the roller brake tester is expressed as:

$$F_3 = F \cdot \frac{r}{l_1} \cdot \frac{z_2}{z_1} \qquad (1.2)$$

In order to ensure that the roller brake tester is showing the exact measured braking force, as mandated by regulations, the roller brake testers installed in vehicle inspection stations are calibrated once a year, by means of a calibration device (hereinafter: apparatus). Roller brake testers are calibrated by the apparatus either pushing or pulling the electric motor lever inside the roller brake tester [3], which is connected to the measuring element of the roller brake tester [4].

The aim of the calibration is to replace the $F_3$ force with the $F_5$ force, and verify the accuracy of the $F$ force, measured by the roller brake tester.

$$F_3 \cdot l_1 = F_5 \cdot l \qquad (1.3)$$

The following equation is derived from equations (1.2) and (1.3):

$$F = F_5 \cdot \frac{l}{r} \cdot \frac{z_1}{z_2} \qquad (1.4)$$

The $\frac{l}{r} \cdot \frac{z_1}{z_2}$ ratio in the above equation is a constant, equal for all roller brake testers with the same operating mechanism. This constant represents the ratio between the force shown on the display of the roller brake tester and the force on the measuring element of the apparatus [5]. We distinguish between two types of roller brake tester mechanisms. In one type, the electric motor lever [3] is pushed and, in the second type the lever is pulled in order to generate the $F$ force.

3. **State of the technical parts**

So far, several designs of the apparatus have been proposed. One of the solutions proposes using a lever, approximately 2.5 meters long. One end of the lever is attached to the measuring lever inside the roller brake tester, while weights are suspended on the opposite side. Based on the established masses of weights and the lever ratio, the force applied to push i.e. pull the measuring lever inside the roller brake tester is calculated. This force is then compared to the force value displayed on the roller brake tester. The problem represents the oscillation of the entire system when the weights are suspended. When suspended on the lever, under the impact of gravitational force and the elastic properties of the system the weight displaces the lever from the position of balance, pulling it too deep inside the roller brake tester, which results in excessive increase of force. When that occurs, the system attempts to restore the balance and we can no longer speak of ascending force, as the force now becomes descending. In terms of metrology, it is essential that there is no excessive increase so that hysteresis can be accurately determined. The transport of the apparatus is also made difficult because of its length. Additionally, this type of apparatus requires constant lifting and lowering of weights during the calibration procedure. Another solution involving weights has a different construction than the one previously described. The solution provides for simultaneous calibration of both sides of the roller brake tester. However, the issue relating to this type of device is that it is designed only to pull the measuring element inside the roller brake tester and its construction fits only one type of the roller brake tester.

Another type of apparatus has a mechanism where the measuring lever inside the roller brake tester is pushed by means of a screw. As the screw is tightened, the compressive force is monitored on the apparatuses digital display. After the desired force is applied to the measuring lever, the force readings displayed on the roller brake tester are compared to the force readings on the apparatus. The main problem with this solution is the inability to maintain constant compressive force due to the deformation of the material caused by temperature and non-elasticity of the material. The second problem is that the measuring lever inside the roller brake tester can only be pushed, but not pulled.

Some solutions use the principle of dynamic calibration of roller brake testers, where the roller brake tester is calibrated using a wheel on which the braking force is measured and then compared to the force obtained on the roller brake tester. The problem with this type of calibration is the unrepeatability of results as the tyre on the calibration wheel is not equally pressed against the roller tester during the rotation of the rollers, which results in the variation of the wheel radius. The complicated design of one such apparatus results in major losses when the force is transferred to the brake roller tester. Another problem represents the fact that such calibration device cannot generate the force big enough to calibrate the entire measuring range of the roller brake tester.

## 4. **Presentation of the essence of the invention**

The primary purpose of the apparatus is the automation of the process of increasing and decreasing the force applied to push or pull the measuring element inside the roller brake tester.

The secondary purpose of the apparatus is to enable calibration of any type of roller brake testers, i.e. achieve the versatility of the device.

Additional purpose and advantages of the apparatus will be presented hereinafter. The length of the apparatus in the transport position i.e. operating position is approximately 1 m, which makes it suitable for transporting it in the trunk of a passenger car. Easy switching from the transport to the operating position makes this apparatus unique. In order to switch from the transport to the operating position, take out the locking pin from the transport position hole, lift the apparatus into the operating position, insert the locking pin into the operating position hole, suspend the control unit from the suspension point by means of the suspension pin and connect the control unit to the driving motor by using the cable.

Mount the apparatus on the roller brake tester so that the apparatuses lever, with the connecting lever attached to one side and the apparatus measuring element attached to the other side, is vertical to the measuring element inside the roller brake tester.

The roller brake tester is calibrated by gradually increasing the force applied to the measuring element inside the roller brake tester, thus moving through the calibration points. Depending on the design of the roller brake tester, the measuring element inside it is either pushed or pulled via the connecting lever which is secured to the measuring element inside the roller brake tester. The driving machine piston moves the apparatuses moment lever which lifts or lowers the control unit and, consequently, the connecting lever attached to the apparatuses lever. The force generated on the measuring element inside the roller brake tester is equal to the force generated on the apparatuses measuring element. While the force is increased or decreased during the calibration of the tester, the apparatuses electronics housed in the control unit, taking into account the force on the apparatuses measuring element, determines how much the driving machine piston should lift or lower the apparatuses moment lever in order to generate the exact specified force. This prevents the excessive increase of force. In the same way, the apparatus maintains the achieved force and prevents any changes of force due to the changes in temperature or the deformation of the material. The use of a driving machine is what makes this apparatus one of kind and different from other devices of the same function.

Given the strength of the forces that are exerted during the calibration of the roller brake testers, the apparatus must be firmly fixed. The apparatus is fixed to the roller brake tester by means of a wide range of connecting accessories, depending on the design of the tester. The connecting accessories include screws of various lengths with wing nuts, apparatus base, brackets with threaded bars for connecting to the housing of the roller brake tester and other small items. Similarly, depending on the design of the roller brake tester, different apparatus connecting levers are used to push or pull the measuring element inside the tester. All connecting levers have threads on one side so that they can be attached to the apparatuses lever by means of a coupling. On the other side of the connecting lever is either a pin, a hole or a prism, depending on the way the lever is attached to the measuring element inside the roller brake tester. The shape of the connecting levers differs depending on the type of the roller brake tester for which they are used. It is crucial that the ends of the connecting lever are on the same axis when in vertical position.

The apparatuses versatility is in its ability to apply both the compressive and the tensile force, as well as in the wide range of connecting levers and couplings, which enables the user to calibrate different types of roller brake testers.

The apparatuses driving motors is controlled by means of control buttons on the control unit and by an Android app with Bluetooth connection, designed specifically for this apparatus. The Android app enables the selection of the type of the roller brake tester that we wish to calibrate using the apparatus, and the compressive or the tensile force ranging from 0 to 40,000 N in grades of 1 N. If the roller brake tester is not stored in the app's database, we can enter its constant manually so that the tester can be calibrated. The app has additional features that simplify the operation, such as the button for selecting automatic operation mode, motor stop button, indication of current force and set force, indication of battery's state of charge.

The control unit and the driving motor are powered by means of a battery housed inside the apparatuses control unit. The battery can be charged through a 12V car socket or a 220V power outlet.

## 5. Short list of figures

Figure 1.    The principle of calibration of roller brake testers
Figure 2.    Spatial view of the apparatus in transport position
Figure 3.    Spatial view of the apparatus in operating position
Figure 4.    The apparatuses control unit and the coupling for connecting levers

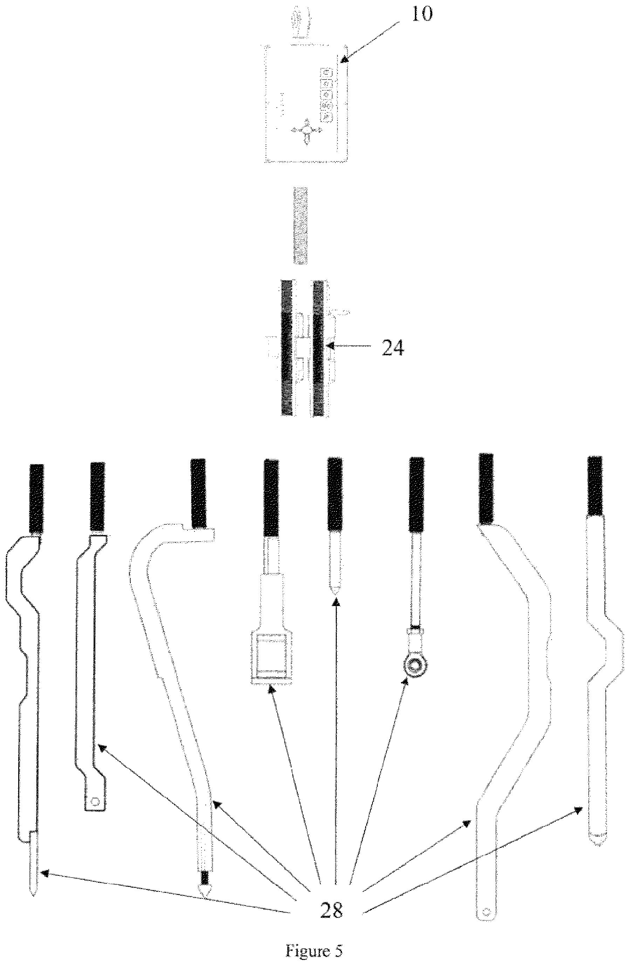

Figure 5.    Connecting levers with the coupling and the control unit
Figure 6.    The apparatuses connecting accessories
Figure 7.    Image of the apparatuses connection to the roller brake tester
Figure 8.    Control unit interior
Figure 9.    Screenshot of the app installed on an Android device

## 6. Detailed description of the implementation of the invention

Main parts of the apparatus are the apparatuses body [6], apparatuses column [7], apparatuses moment lever [8], driving machine [9] and control unit [10].

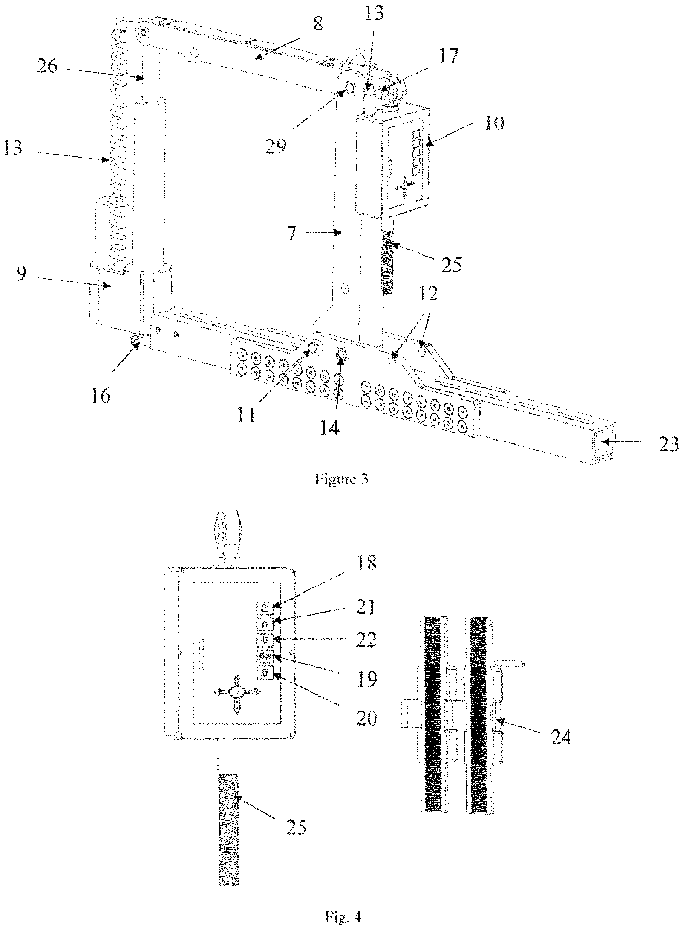

Before operation the apparatus must be set from the transport position (Figure 3) into the operating position (Figure 3). Take the locking pin [11] out of the transport position hole [12] and the connection cable [13] from its transport position. Place the apparatuses column [7] in vertical position by rotating it around the apparatus column's pivot [14] and secure it by inserting the locking pin [11] through the operating position hole [15]. Secure the driving machine base [16] to ensure that the driving machine [9] is also vertical. Pull out the pin of the control unit's suspension point [17] and use it to suspend the control unit [10]. Attach the connecting cable [13] to the control unit [10] and use the ON/OFF control button [18] to turn on the control unit [10]. Using the control button for transport/operating mode [19], set the apparatus in the operating position (Figure 3). The apparatus is now ready to be mounted on the roller brake tester.

Using the screws of different lengths with wing nuts [27a] [27b], brackets with threaded bars for attaching to the tester's housing [27c] [27d] and various other small connecting items [27], fix the apparatus onto the housing of the roller brake tester in predefined points. If the roller brake tester is calibrated using the method of pulling the measuring element inside the roller brake tester [4], calibration can be carried out without having to fix the apparatus.

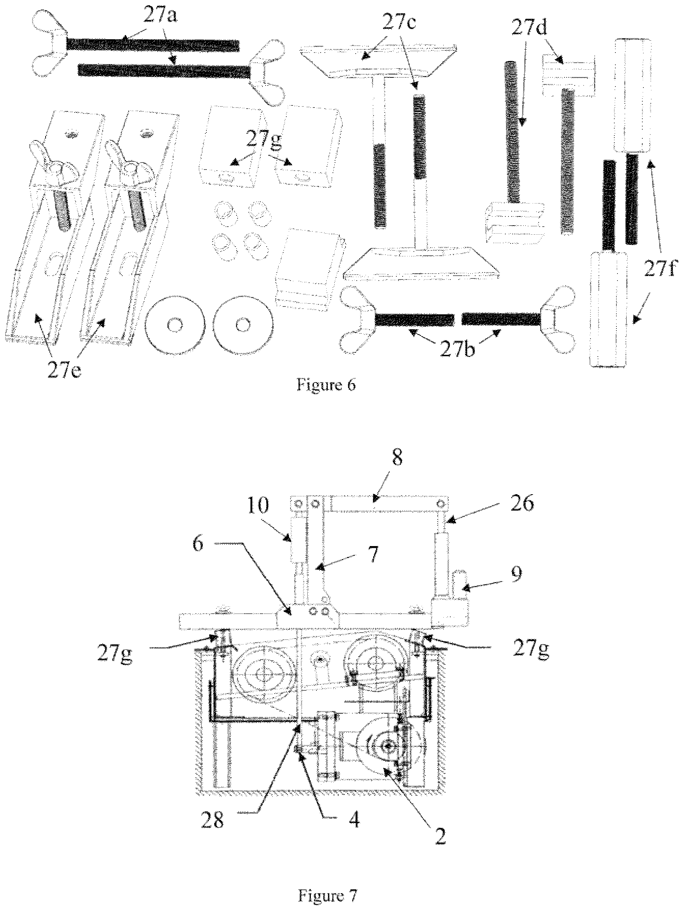

The apparatus must be positioned in such way that the control unit [10] is positioned above the point which the manufacturer of the roller brake tester had designated as the calibration point, so that the connecting lever [28] can exert vertical force. When mounting the apparatus, use the supports included in the connecting accessories [27e] [27f] [27g] to ensure that the apparatuses body [6] is placed in approximately horizontal position. If the apparatus within its standard dimensions cannot be mounted because of the roller brake tester's design, use the apparatus extension [23], housed in the apparatuses body [6], in order to mount it onto the roller brake tester (Figure 7).

After the apparatus is mounted on the roller brake tester, select the connecting lever [28] suitable for the tester being calibrated and, using the coupling [24], attach it to the apparatuses lever. Given the mass of the connecting lever [28] and the coupling [24] that exert the force on the apparatuses measuring element [4], always reset the zero point of the apparatus after attaching the connecting lever [28]. Use the button for the zero point reset [20] on the control unit. In order to correctly reset the zero point, the connecting lever [28] must be hanging freely from the control unit [10].

After resetting the zero point, the connecting lever [28] must be secured in the position designated for the calibration of that type of the roller brake tester, bearing in mind whether the tester's measuring element [4] is calibrated by applying tension or compressive force. Using the control buttons for lifting [21] or lowering [22], we push or pull the connecting lever [28], applying at least 15 N force. This is achieved by the driving machine [9] retracting or extending the driving machine piston [26], thereby rotating the apparatuses moment lever [8] around the apparatuses pivot [29], and pushing or pulling the connecting lever [28] which is, by means of the coupling [24], attached to the apparatuses lever [25] of the control unit [10].

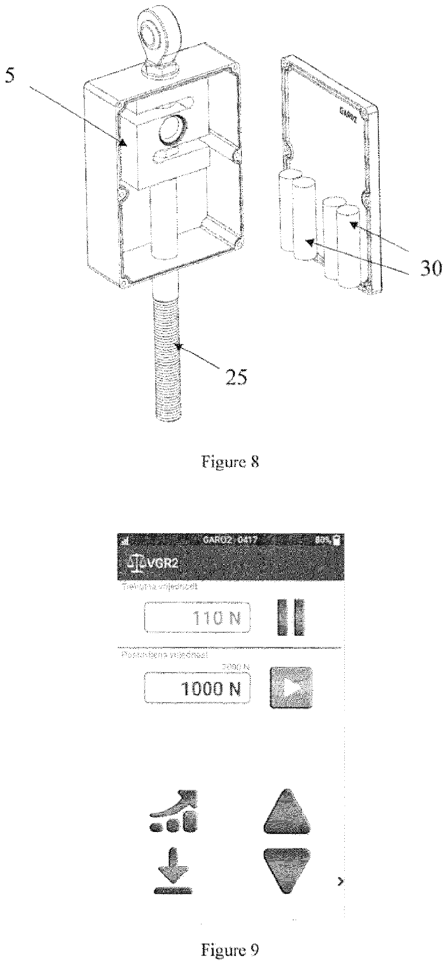

After securing the connecting lever [28], the apparatus is ready to be used for testing the braking force on the roller brake tester, by means of the app installed on an Android device (Figure 9). The device is connected to the apparatus via Bluetooth connection.

After going through all calibration points as defined by the calibration procedure, detach and disconnect the connecting lever [28] from the control unit [10] and dismount the apparatus from the roller brake tester. By pressing the control button for selecting transport/operating position [19], retract the driving machine's piston [26] into the transport position and turn off the control unit [10]. Disconnect the connecting cable [13] from the control unit [10]. After pulling out the pin for the control unit's suspension point [17], remove the control unit. Fold the entire apparatus into the transport position (Figure 2). After you finish with the operation, plug the control unit [10] into a 12 V car socket or a 220V power outlet in order to charge the battery [30].

## 7. List of designators used

| | |
|---|---|
| 1 - | wheel of the tested vehicle |
| 2 - | driving electrical motor of the roller brake tester |
| 3 - | lever of the electrical motor |
| 4 - | roller brake tester's measuring element |
| 5 - | apparatuses measuring element |
| 6 - | apparatuses body |
| 7 - | apparatuses column |
| 8 - | apparatuses moment lever |
| 9 - | driving machine |
| 10 - | control unit |
| 11 - | locking pin |
| 12 - | transport position hole |
| 13 - | connecting cable |
| 14 - | apparatus column's pivot |
| 15 - | operating position hole |
| 16 - | driving machine base |
| 17 - | pin for the control unit's suspension point |
| 18 - | ON/OFF control button |
| 19 - | control button for selecting transport/operating position |
| 20 - | control button for zero-point reset |
| 21 - | control button for lifting |
| 22 - | control button for lowering |
| 23 - | apparatus extension |
| 24 - | coupling |
| 25 - | apparatuses lever |
| 26 - | driving machine piston |
| 27 - | connecting accessories |
| 27a,b - | screws with wing nuts |
| 27c,d - | brackets with threaded bars |
| 27e,f,g - | supports |
| 28 - | connecting lever |
| 29 - | apparatuses pivot |
| 30 - | apparatuses battery |

**Claims**

1. The apparatus for calibrating a device with rollers for evaluation of breaking force on a outer side of a wheel, consisting of the apparatuses body [6]; apparatuses column [7] attached to the apparatuses body [6] by means of the apparatus column's pivot [14]; the apparatuses moment lever [8] connected to the apparatuses column [7] by means of the apparatuses pivot [29]; **characterized in that** the increasing and decreasing of the force during the calibration is achieved by means of the driving machine [9], connected to the apparatuses moment lever [8], and of the control unit [10] suspended by the pin of the control unit's suspension point [17] onto the apparatuses moment lever [8] and connected to the driving machine [9] by means of the connecting cable [13], that by lifting or lowering the driving machine's piston [26] lifts or lowers the apparatuses moment lever [18], which rotates around the apparatuses pivot [29] and thereby lifts or lowers the connecting lever [28], which is by means of a coupling [24] attached to the apparatuses lever [25] on the control unit [10]. Thus, the increasing of the force during the calibration is achieved without excess increase resulting from the regulation of the driving machine [9].

2. The device according to claim 1 **characterized, in that** the apparatuses lever [25] and the connecting lever [28] are threaded and can be connected and secured by means of a coupling [24], thereby enabling the attachment of different types of connecting levers [28] to the device and, as a result, the calibration of the measuring element of the roller brake tester [4] by applying either compressive or tension force, regardless of the type of the measuring clement.

3. The device according to claim 1 **characterized in that** it can be controlled by means of a specifically designed app installed on an Android device, whereby such Android device and the control unit [10] are connected via Bluetooth connection.

4. The device according to claim 1 **characterized in that** it can be folded from the operating position into the transport position 1-meter-wide, by taking the locking pin [11] out of the operating position hole [15], placing the apparatuses column [7], the apparatuses moment lever [8] and the driving machine [9] parallel to the apparatuses body [6] and inserting the locking pin [11] in the transport position hole [12].

5. The device according to claim 1 **characterized in that** it is charged by means of rechargeable batteries [30] housed inside the control unit [10].

Figure 1

Figure 2

Figure 3

Fig. 4

Figure 5

Figure 6

Figure 7

5

30

25

Figure 8

110 N

1000 N

Figure 9

Europäisches
Patentamt

European
Patent Office

Office européen
des brevets

# EUROPEAN SEARCH REPORT

Application Number

EP 19 00 0459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 293 765 A2 (DEUTZ AG [DE]) 19 March 2003 (2003-03-19) * abstract * * paragraphs [0009], [0012] * * figure 1 * ----- | 1-5 | INV. G01L5/28 G01L25/00 |
| A | DE 20 2017 101176 U1 (CARTESY GMBH [DE]) 20 March 2017 (2017-03-20) * abstract * * figures 1-3 * ----- | 1-5 | |
| A | DE 10 2017 108279 B3 (DEKRA AUTOMOBIL GMBH [DE]) 1 February 2018 (2018-02-01) * abstract * * figure 1 * ----- | 1-5 | |

TECHNICAL FIELDS SEARCHED (IPC)

G01L

The present search report has been drawn up for all claims

| Place of search | Date of completion of the search | Examiner |
|---|---|---|
| The Hague | 25 February 2020 | Grewe, Clemens F. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 00 0459

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2020

| Patent document cited in search report | | Publication date | Patent family member(s) | | Publication date |
|---|---|---|---|---|---|
| EP 1293765 | A2 | 19-03-2003 | DE | 10145867 A1 | 03-04-2003 |
| | | | EP | 1293765 A2 | 19-03-2003 |
| DE 202017101176 | U1 | 20-03-2017 | CN | 110446913 A | 12-11-2019 |
| | | | DE | 102017117773 B3 | 11-01-2018 |
| | | | DE | 102017117782 B3 | 11-01-2018 |
| | | | DE | 202017101176 U1 | 20-03-2017 |
| | | | DE | 202017104688 U1 | 25-08-2017 |
| | | | DE | 202017104689 U1 | 16-08-2017 |
| | | | EP | 3574298 A1 | 04-12-2019 |
| | | | WO | 2018158266 A1 | 07-09-2018 |
| | | | WO | 2018158268 A1 | 07-09-2018 |
| | | | WO | 2018158271 A2 | 07-09-2018 |
| DE 102017108279 | B3 | 01-02-2018 | NONE | | |

EPO FORM P0459

For more details about this annex : see Official Journal of the European Patent Office, No. 12/82